(19) Europäisches Patentamt
European Patent Office
Office européen des brevets

(11) **EP 3 190 460 A1**

(12) **EUROPEAN PATENT APPLICATION**

(43) Date of publication:
**12.07.2017 Bulletin 2017/28**

(51) Int Cl.:
*G03B 35/08* (2006.01)     *G03B 35/18* (2006.01)
*G03B 37/04* (2006.01)     *G02B 27/22* (2006.01)
*H04N 5/341* (2011.01)

(21) Application number: **16305007.3**

(22) Date of filing: **05.01.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Giroptic**
**59000 Lille (FR)**

(72) Inventors:
• **OLLIER, Richard**
  **59110 La Madeleine (FR)**
• **DE ROCQUIGNY DU FAYEL, Arnould**
  **59000 Lille (FR)**

(74) Representative: **Grünecker Patent- und
Rechtsanwälte
PartG mbB
Leopoldstraße 4
80802 München (DE)**

(54) **IMAGE CAPTURING DEVICE ON A MOVING BODY**

(57)     The present invention relates to an assembly including a body for carrying two optical arrangements, the body having a flat shape with a first side and a second side opposite to the first side; the two optical arrangements namely a first optical arrangement and a second optical arrangement, each of the two optical arrangements having a field of view of at least a half sphere and comprising a head lens and a sensor; wherein the first optical arrangement is mounted on the body with its head lens on the first side of the body viewing at least a half sphere on the first side of the body and the second optical arrangement is mounted on the body with its head lens on the second side of the body viewing at least a half sphere on the second side of the body; and the inte-nodal distance between the respective two optical arrangements is not smaller than a minimum distance at which 180 degree fields of view of the optical arrangements do not view the body.

**Fig. 4A**

**Description**

The invention relates to an image capturing device located on a moving body for capturing images or videos for spherical or 3D viewing.

BACKGROUND OF THE INVENTION

Currently, capturing of images and videos with cameras located on moving bodies such as drones has become popular.

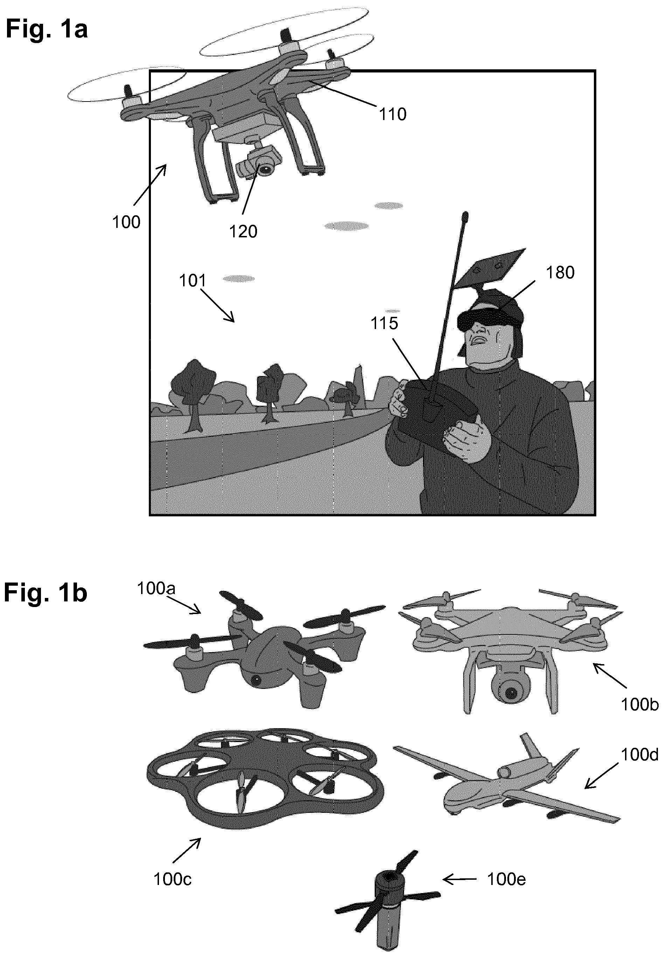

Figure 1a illustrates an exemplary scenario of such capturing. In particular, a user controls with the remote control device 115 a drone 110 which carries a camera 120. The movable system 100 including the drone 110 and the camera 120 captures a scene 101. The user wears a headset 180 which wirelessly receives the captured images or videos from the camera 120.

Figure 1b provide some examples of commercially available drones which may carry a camera. For instance, drone 100a has a camera integrated, whereas drone 100b carries are mountable cameras. Further drones 100c, 100d and 100e with different shapes are shown, which may carry either mountable cameras or embed a camera.

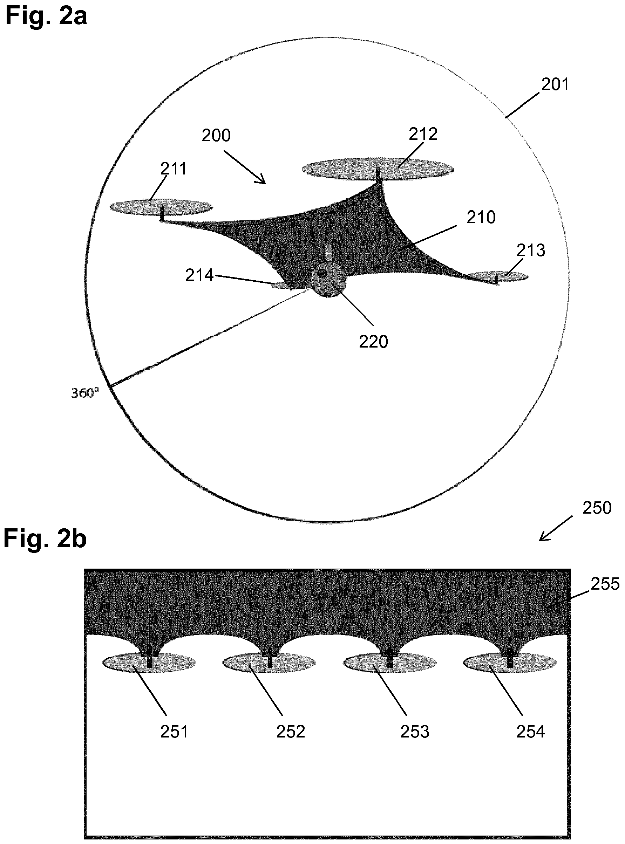

In the field of image capturing, acquiring a 360° field of view or a spherical view is possible by juxtaposition and digital stitching of several images obtained by means of two or more lenses distributed around a circle or a sphere or other extended structure. However, if a spherical camera is carried by the drone, it does not only capture the scene 101 but also parts of the drone. This situation is illustrated in Figures 2a and 2b.

In particular, Figure 2a shows a moving assembly 200 which includes a drone 210 with four propellers 211, 212, 213, and 214 and a camera 220 carried by the drone 210. The camera 220 in a camera which enables spherical capturing indicated in the figure by the sphere 201.

Figure 2b shows a view 250 captured by the camera 220 of the moving assembly 200. In particular, since the camera 220 is mounted on the bottom of the drone 210, the captured view 250 also shows the captured portion of the drone 255 and the captured four propellers 251, 252, 253 and 254 of the drone. In order to carry a camera, the propellers of the drone are typically rather wide so that a considerable portion of the captured view is occluded by the drone body and propellers. A similar problem may occur when capturing images for other types of 3D reconstruction such as stereoscopic reconstruction.

Accordingly, a portion of the captured spherical image or video is wasted with the image of the drone. The drone is present on all spherical images captured. Moreover, the surrounding above the drone cannot be captured and thus, the captured images do not effectively provide a spherical image of the entire surroundings.

SUMMARY OF THE INVENTION

The aim of the present invention is to overcome the aforementioned drawbacks by proposing a movable assembly for capturing spherical images of the surroundings without capturing itself (i.e. portions of the assembly).

This is achieved by the features of the independent claims.

Further advantageous embodiments are subject matter to the dependent claims.

It is a particular approach of the present invention to provide an assembly with an essentially flat body on which a spherical camera is mounted or mountable in such a manner that an optical arrangement located on one side of the flat body views at least a half sphere over the one side of the flat body and another optical arrangement located on the other side of the flat body views at least a half sphere over the other side of the flat body.

According to an aspect of the present invention, an assembly for capturing images for spherical or 3D reconstruction, the assembly comprising: a self-propelled body for carrying two optical arrangements, the body having a substantially flat shape with a first side and a second side opposite to the first side;the two optical arrangements namely a first optical arrangement and a second optical arrangement, each of the two optical arrangements having a field of view of at least a half sphere and comprising a head lens and a sensor; wherein the first optical arrangement is mounted on the body with its head lens on the first side of the body viewing at least a half sphere on the first side of the body and the second optical arrangement is mounted on the body with its head lens on the second side of the body viewing at least a half sphere on the second side of the body; and the distance between the head lenses of the respective two optical arrangements is not smaller than a minimum distance at which 180 degree fields of view of the respective optical arrangements do not view the body.

In particular, the distance between the head lenses of the respective two optical arrangements is a plurality of times smaller than the largest dimension of the 1st and 2nd side of the body.

Advantageously, the assembly further comprises: an image processing device for processing the captured images; and a controller for controlling parallel reading-out the captured images from the sensors of the two optical arrangements and providing the captured images to the image processing device with a predetermined period to obtain corresponding two video image sequences; and a communication interface for transmitting the processed captured images to an external device.

For instance, the image processing device is configurable to stitch the images of the video sequence to a spherical image within a time smaller than the time period between capturing two successive images of a video sequence or its multiple, and the communication interface is configured to transmit the stitched images of the video sequence to the external device.

Alternatively or in addition, the image processing device is configurable to merge the images to one merged image within a time smaller than the time between capturing two successive images of a video sequence, and the communication interface is configured to transmit the stitched images of the video sequence to the external device for further processing including stitching.

For instance, each of the two optical arrangements is a single optical group with at least a half-sphere field of view; and the optical axes of the head lenses of the two optical arrangements are parallel or identical.

Advantageously, the self-propelled body is a remotely controllable drone including a drone base and a plurality of propellers. Then the optical arrangements may be mountable and demountable on the drone body; and the drone body embodies electronics for controlling the video image capturing, image processing and power supply for the optical arrangements.

On the other hand optical arrangements may be cameras mountable and demountable on the drone body, each camera embodying electronics for controlling the video image capturing, image processing, and communication interface for transmitting the captured images to an external device.

The image processing device may further be configured to apply at least one of gamma correction, white balance or compression to the captured video images.

The assembly advantageously further comprises a position capturing means for capturing current position of the assembly including at least one of GPS coordinates and yaw, pitch, roll orientation.

According to an embodiment the system for capturing spherical or 3D video sequences, comprises the assembly as described above for performing video image capturing and providing the captured video images to a computer over a wireless interface, and the computer for receiving from the assembly the captured images, stitching them and outputting the stitched images to a display device.

Moreover, the system further comprises the display device which is connected with the computer via wireless interface and capable of receiving and displaying from the computer stitched images.

According to an aspect of the invention, a drone is provided comprising: a drone body and a plurality of propellers; and a mounting means for mounting thereon optical arrangements for capturing spherical images, a first optical arrangement on a first side of the drone and a second optical arrangements on a second side of the drone opposite to the first side, the mounting means being adapted to mount the optical arrangements in such a manner that a distance between the head lenses of the respective two optical arrangements is not smaller than a minimum distance at which the fields of view of the optical arrangements cross without viewing the drone.

According to another embodiment, a personal communication device is provided configurable for capturing images for spherical reconstruction comprising: a body for carrying two optical arrangements, the body having a substantially flat shape with a first side and a second side opposite to the first side; the two optical arrangements namely a first optical arrangement and a second optical arrangement, each of the two optical arrangements having a field of view of at least a half sphere and comprising a head lens and a sensor; wherein the first optical arrangement is mounted on the body with its head lens on the first side of the body viewing at least a half sphere on the first side of the body and the second optical arrangement is mounted on the body with its head lens on the second side of the body viewing at least a half sphere on the second side of the body; and the distance between the head lenses of the respective two optical arrangements is not smaller than a minimum distance at which 180 degree fields of view of the respective optical arrangements do not view the body.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

The above and other objects and features of the present invention will become more apparent from the following description and preferred embodiments given in conjunction with the accompanying drawings in which:

Figure 1a        is a schematic drawing illustrating capturing of images by a camera carried by a remotely controlled drone;

Figure 1b        is a schematic drawing illustrating various forms of drones with and without cameras;

Figure 2a        is a schematic drawing illustrating a drone carrying a camera;

Figure 2b        is a schematic drawing illustrating an equirectangular view captured by a spherical camera carried by the drone;

| | |
|---|---|
| Figure 3 | is a schematic drawing illustrating an assembly with a body carrying optical arrangements for image capturing; |
| Figure 4A and 4B | is a schematic drawing illustrating influence of a distance between the inter-nodal distances of the optical arrangements; |
| Figure 5 | is a schematic drawing illustrating a drone and half-spheres viewed therefrom; |
| Figure 6 | is a block diagram illustrating functional structure of the assembly; |
| Figure 7 | is a block diagram illustrating functional structure of the assembly with a drone; |
| Figures 8A-8C | are schematic drawings illustrating exemplary optical groups; |
| Figure 9 | is a flow diagram illustrating an example of processing of the captured images; |
| Figure 10 | is a flow diagram illustrating an example of processing of the captured images; |
| Figure 11 | is a flow diagram illustrating an example of processing of the captured images; |
| Figure 12 | is a schematic drawing illustrating timing of a processing for capturing images; and |
| Figures 13A and 13B | are block diagrams illustrating embodiment of the invention in a personal communication device. |

DETAILED DESCRIPTION

The present disclosure relates to movable assembly with a flat body having a top and a bottom side, on which a spherical image capturing device is mounted or mountable in such a manner that an optical arrangement located on one of the flat body sides views at least a half sphere over the one side of the flat body and another optical arrangement located on the other of the flat body sides views at least a half sphere over the other side of the flat body.

The optical arrangement is advantageously a single optical group including a head lens through which the light enters the optical group and a sensor which captures the light. The optical group may comprise further lenses in the light path between the head lens and the sensor. In order to cover the entire sphere, such optical group comprises a fisheye lens capable of covering at least a half sphere, i.e. 180°. An advantage of providing a single optical group is a more compact construction with a relatively low weight. This enables also a smaller construction of the drone and/or, possibly, also lower power consumption by the drone.

However, the present invention is not limited by such an arrangement. In general, the optical arrangement may include more than one optical group. An advantage of providing a plurality of optical groups is that they can have a smaller field of view. On the other hand, the images captured by the respective optical groups need to be stitched, too, in order to provide a spherical image. This increases the processing complexity.

A full spherical view requires stitching of the images taken by the two optical arrangements. In order to enable an effective stitching, the head lenses of the respective optical groups forming the image capturing device should be as close to each other as possible. This is because a reconstructed spherical image represents view as if taken from a single point in the middle. Thus, by introducing a gap between the optical groups may lead to imprecision, blind spots or misalignments of the stitching.

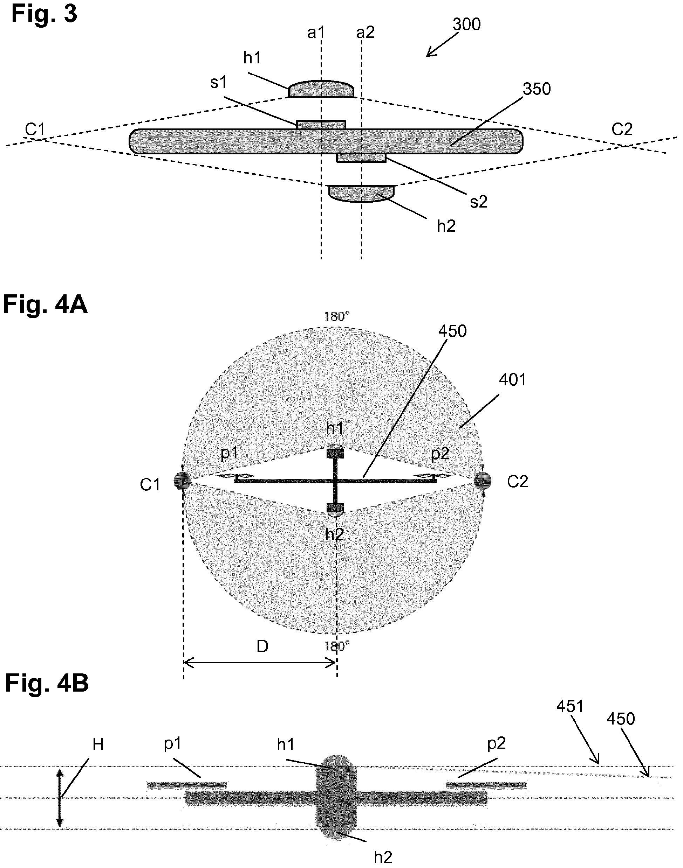

Figure 3 exemplifies an assembly 300 for capturing spherical images. The assembly 300 comprises a body 350 for carrying two optical arrangements s1-h1 and s2-h2. The body has an essentially flat shape with a first side and a second side opposite to the first side. The assembly further comprises the two optical arrangements namely a first optical arrangement s1-h1 and a second optical arrangement s2-h2, each of the two optical arrangements having a field of view of at least a half sphere and comprising a head lens h1, h2 and a sensor s1, s2. In order to avoid the assembly 300 to view itself, the first optical arrangement h1-s1 is mounted on the body 350 with its head lens h1 on the first side of the body 350 viewing at least a half sphere (indicated illustratively by the space over C1-h1-C2) on the first side of the body 350 and the second optical arrangement h2-s2 is mounted on the body 350 with its head lens h2 on the second side of the body 350 viewing at least a half sphere (over C1-h2-C2) on the second side of the body. The distance between the head lenses h1, h2 of the respective two optical arrangements is not smaller than a minimum distance at which 180 degree fields of view of the optical arrangements do not see the body.

In Figure 3, the two optical arrangements h1-s1 and h2-s2 have parallel optical axes a1 and a2. Their fields of view cross at the points C1 and C2. This arrangement is merely illustrative.

According to an example, each of the two optical arrangements h1-s1, h2-s2 is a single optical group with at least a half-sphere field of view and the optical axes a1 and a2 of the head lenses h1, h2 of the two optical arrangements are parallel or identical.

Such arrangement is illustrated in Figure 4A. Figure 4A shows and example in which the body of the assembly is a drone. The drone is formed by a drone body 450 and includes a plurality of propellers, two of which p1 and p2 are shown in the figure. Two head lenses h1 and h2 of the respective two optical groups cover a sphere 401. Each of the optical groups has a field of at least view 180°. The fields of view cross in points C1 and C2 and do not cross the body of the assembly and thus, the stitching can be performed after these points as will be described in the following. The stitching points C1 and C2 are in distance D from the optical groups. In general, if the optical groups are not arranged in the center of the drone, the distance D may be different for points C1 and C2.

Figure 4B schematically shows the drone of Figure 4A, including the propellers p1, p2 and the head lenses h1, h2.

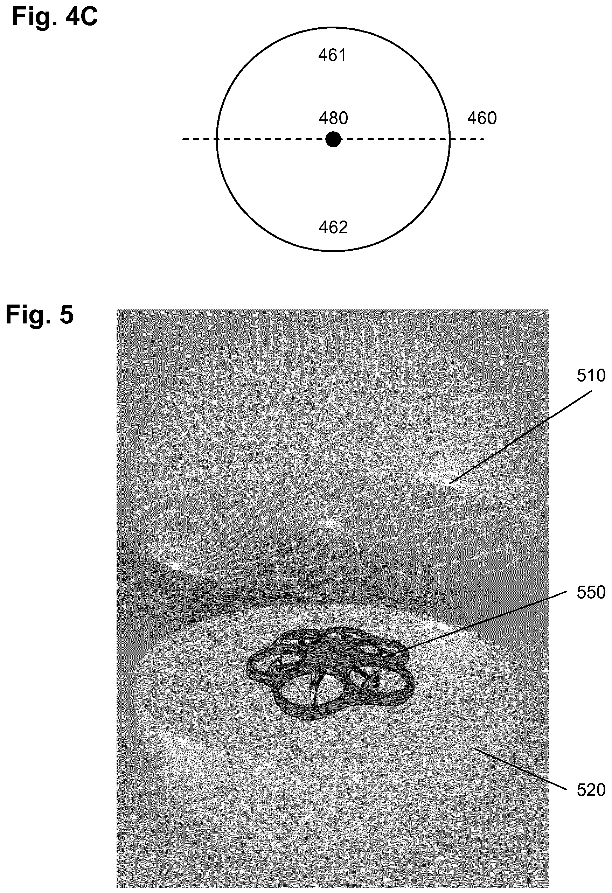

An inter nodal distance H represents the nodal distance between the two head lenses h1 and h2, wherein on each lens the nodal point represents the 180 degrees field of view. In theory, a perfect stitching may be performed when the inter nodal distance is zero. With H=0, the two half-spheres viewed are immediately adjacent and the captured sphere appears to be captured from the same point in space. Accordingly, there is no need for any overlapping or crossing of the fields of view, since stitching is equivalent to adjusting two captured half-spheres back to back as is schematically illustrated in Figure 4C, the borders of the half-spheres are parallel.

However, as can be seen from Figures 3, 4A and 4B, if the inter nodal distance H is greater than zero, then a stitching without showing the body may be performed at a minimal distance D from the middle of the 360° capturing system, using blending of the images. Blending may be performed in order to reduce parallax caused by the overlapping field of views after the points C1 and C2.

A perfect stitching is possible when the inter nodal distance H occupies a surface of 1 pixel or less on the sensors s1, s2. The term "perfect" stitching here refers to stitching of 180° fields of view, which merely requires merging such 180° fields together as in the case when the distance H is zero. In such case the two parallels do cross / unite because of the limitation of the sensor resolution, i.e. its pixel size. In other words, parallel lines which both fall into one pixel can no longer be recognized as parallel or crossing. A distance P in which this occurs can then be calculated based on the sensor pixel size and the distance H.

The minimum overlap angle represents the field of view angle covered by a single pixel out of the half sphere. This angle is a function of the pixel size. In general, the pixel size represents the resolution and thus the sampling rate. For instance, in Figure 4B, lines 450 and 451 illustrate the angle which corresponds to a field of view visible by a single pixel in the image sensor.

The relation between a pixel size Px, the distance P and the distance H can be calculated as follows:

$$P = \frac{H}{\alpha \cdot \frac{\pi}{180}}$$

P is the distance at which the perfect stitching can be performed. H is the inter-nodal distance between the two lenses h1 and h2. Alpha is a field of view angle for one pixel in degrees. Alpha may be further calculated as follows:

$$\alpha = \frac{Nq}{F}$$

wherein F represents field size for one degree at 90° field of view and Nq may be calculated as follows: $Nq = Px \cdot \sqrt{2}$. This corresponds to the diagonal pitch. (The number of lines per mm may be calculated as 1/(2*diagonal pitch), wherein the diagonal pitch is $Px \cdot \sqrt{2}$ and then Nq is obtained as an inverse of twice the number of lines, resulting in the diagonal pitch).

In particular, F can be calculated based on the lens characteristics as follows:

$$F = \frac{c2 - c1}{b2 - b1}$$

wherein b1 and b2 are angles of 89 and 91 degrees and c1 and c2 are the respective corresponding heights of the ray on the image sensor (in pixels) under these angles.

For instance, if pixel size Px=1.4 micrometer, H=2 cm, and F=18.1185 micrometer, then the distance P is approximately 10,5 meters. When stitching images coming from two sensors as shown in Figures 4A and 4B, blending is usually used. The blending is performed by taking data coming from the outer area of one of the halve spheres and mixing them with data coming from the inner of the other. Blending may cause some artifacts.

In order to achieve a good stitching, the overlap angle should not enclose the propellers or other parts of the drone. In order to construct compact assemblies, the internal nodal distance is to be as small as possible. As can be seen from Figures 4A and 4B, with decreasing the inter nodal distance, the line 450 will cross the drone, which means that the drone will be included into the field of view of the 180° camera. On the other hand, when increasing inter-nodal distance H, the stitching distance P will grow.

The distance P depends on the pixel size and the lens. For instance, In particular, P may often be rather large, so that blending may be used after the distance D. It is also noted that image sensors usually use a Bayer array color filter, which virtually increases the local pixel size as not each color is sampled on each pixel. The missing color values are later interpolated.

According to an embodiment, the distance H between the head lenses of the respective two optical arrangements is a plurality of times smaller than the largest dimension of the $1^{st}$ and $2^{nd}$ side of the body. In other words, the entire assembly 300 is also flat.

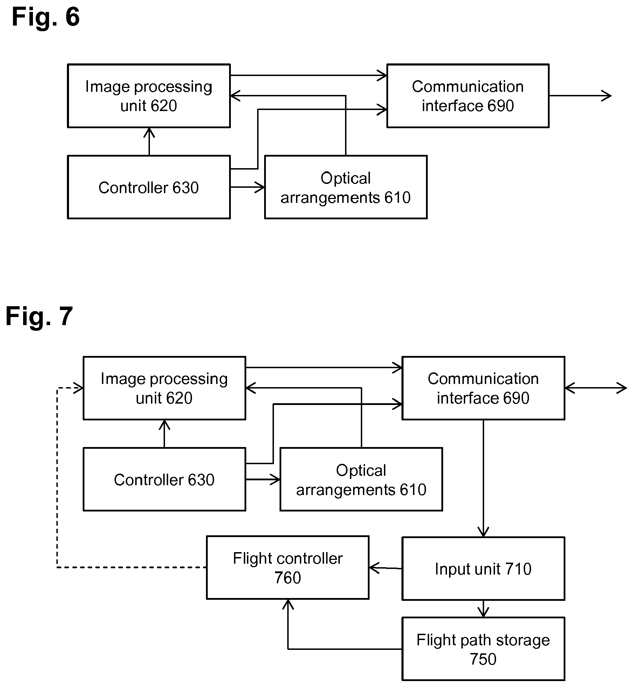

Figure 6 illustrates functional structure of the assembly with a movable body which carries at least two optical arrangements 610. The assembly further comprises an image processing device 620 for processing the captured images and a controller 630 which controls the at least two sensors of the two optical arrangements. The control includes controlling a parallel and in particular a simultaneous reading-out of the captured images from the sensors of the two optical arrangements 610 and providing the captured images to the image processing device with a predetermined period to obtain corresponding two video image sequences. The assembly further advantageously comprises a communication interface 690 for transmitting the processed captured images to an external device. The controlling performed by the controller 630 includes providing a clock (synchronization) for reading-out the sensors and for outputting the read-out images to a buffer or directly to the image processing unit 620.

In particular, the controlling of the two optical arrangements includes controlling the reading out of the two respective sensors. For instance, the controller 630 provides timing for reading out the sensors and for providing the read-out video images to the image processing device for further processing. The timing is provided by means of a clock signal as is known to those skilled in the art. Advantageously, the controller 630 synchronizes the reading-out from the two sensors so that both sensors are read-out at the same time. However, there may be some misalignments, so that a buffer may be provided in the image capturing apparatus used to buffer the read-out images. In this way, it is possible to provide the two captured video images together for the next processing stage at the timing also controlled by the controller 630.

However, other implementations of timing (synchronization of images captured by the two sensors) are possible. For example, the reading-out from the sensors does not need to be performed at the same time and the controller 630 may time them differently. The present invention is not limited by any particular sensor read-out synchronization timing.

The controller 630 may also control the interface 690 to that images of the captured video are transmitted to the external device with a predetermined timing.

The image processing unit 620 may apply to the captured images stitching or merging and any operations for improving the images such as gamma correction, white balance, gain control, any filtering operations as will be discussed below in more detail. The image processing unit 620 may be embodied on one or more processors. The image processing unit 620 may perform stitching of the captured images by transforming the captured images into a desired projection which enables to merge them so that they form a continuous image of the scene. In particular, the fisheye projection of the captured images may be transformed into a flat projection enabling for stitching its boundaries with the boundaries of the other half-sphere. For the purpose of stitching, in general, blending may also be applied, where the boundary pixels (and possibly further pixels close to the boundary) of the two stitched images are mixed with a predetermined ratio (for instance equal for both images).

It is noted that the inter-nodal distance may also be adjustable.

**Assembly with a drone**

An exemplary embodiment of the assembly according to the invention is a drone on which an image capturing arrangement is mountable or mounted. A drone is a freely movable body since is not limited in movement by any attachment.

Figure 5 shows a schematic illustration of a drone 550 and two half-spheres 510 and 520 viewed by respective optical arrangements located on the top and bottom side of the drone respectively (not shown).

*Controlling the drone*

The drone is advantageously remotely controllable by a remote controller such as the remote controller 115 illustrated in Figure 1a specifically provided for controlling of the drone. However, the present invention is not limited to such a controller. Rather, the remote controller may be embodies by a multifunctional remote control device such as a smartphone (with a corresponding app) or a wireless joystick. Preferably, the remote controller communicates with the drone over a wireless interface in order to maintain the free movability of the drone. For instance, a dedicated remote controller, a smartphone, joystick or a mobile phone may communicate with the drone via infrared connection or via a radio connection with standardized interface such as WLAN (IEEE 802.11 standard family), BlueTooth (IEEE 802.15 standard family), or any other interface. However, for example, dedicated remote controllers may also use a proprietary communication interface supported by the drone.

In addition to controlling the movement of the drone, the remote controller may also be adapted to remotely control the image capturing device carried by the drone. The communication may be performed over the same wireless interfaces exemplified above. In particular, the remote control may be configured to instruct the image capturing device carried by the drone, upon receiving an input of the user, to start video capturing or to terminate video capturing. It may be configured to instruct the image capturing device to capture a still image. In addition, the remote control may be configured to receive an input of the user concerning some other capturing settings and to control the image capturing device to perform image or video capturing accordingly. Such capturing settings may be, for instance, setting exposure, aperture, zoom, gain, spatial or temporal resolution, compression settings or settings for transmission of the captured images to an external device.

In addition to Figure 6, Figure 7 illustrates further functional components of the assembly being a drone with integrated or mountable optical arrangements 610, image processing unit 620, communication interface 690, and timing controller 630. The drone in Figure 7 further includes an input unit 710, a power supply unit 740, a flight path storage 750, and a flight path controller 760. The input unit 710 receives over the communication interface 690 commands from the user via remote control concerning the flight control. These may be commands including speed and direction of the desired movement of the drone. These commands are then provided to the flight controller 760. Moreover, the current position of the drone may be also provided to the image processing unit and/or coded an output together with the processed images to the external device. The position information may be used to perform stitching.

Alternatively, or in addition to controlling the drone by the remote controller, the drone may allow for at least partially autonomous control. This may be achieved for instance in that the drone comprises a flight path storage 750 for storing a predetermined flight path. The flight controller 760 may be configured to retrieve the predetermined flight path from the flight path storage 750 and control the propellers of the drone in accordance with the predetermined flight path. The input unit 710 of the drone may be adapted for receiving the predetermined path to be stored from the interface 690. The storage 750 may thus be rewritable and capable of storing multiple flight paths. The input is either a user interface or a connection to an external device. For example, the user may use a smartphone or a computer to program the predetermined path (for instance by capturing the path with the drone during manually controlled flight) and the smartphone or computer may instruct the drone over a wireless interface to store the predetermined path.

*Arrangement of the image or video capturing device on the drone*

The image/video capturing device according to a variant is an integral part of the movable assembly, i.e. it is mounted and fixed on the drone body or directly embedded in the drone body. This variant enables a compact implementation in which the optical arrangements are controlled by a common controller 630 and may share a common image processing unit 620 as well as the interface 690.

Another variant of the movable assembly is a drone with some mounting means for mounting the image/video capturing device onto the drone. For instance, the optical arrangements are mountable and demountable on the drone body and and the drone body further carries electronics for controlling the video image capturing (the controller 630), image processing (620) and power supply for the optical arrangements fixedly attached to the drone body. This arrangement enables different optical arrangements to share the processing base of the drone.

The mounting means may be any mechanical means for detachably fixing the optical arrangements onto the drone (both respective sides), for example by screwing or clipping or engaging in another way. Moreover, an electric connection between the sensors and the drone is to be provided. It may be advantageous to provide an opening in the center of the drone and to locate an at least 360° camera within the opening, for instance by providing some mounting means on the drone body.

However, the present invention is not limited to such an arrangement. It may be beneficial to provide a drone with mounting means for optical arrangements provided in complete cameras, which may also be used when demounted from the drone on their own for capturing images or videos. Such camera may include not only an optical group with a head lens, further lenses and a sensor, but also image pipe processing and timing control as well as input and output for receiving and transmitting data. In particular, the drone may carry the cameras, which are directly controlled and synchronized from the external device via a wireless interface. For instance, the user may then control the drone via a remote control and at the same time control starting and stopping of video capturing by both cameras. The cameras may independently deliver a raw or compressed video streams, which are decoded and parsed at the external device and stitched.

In this case, the cameras may also have their own power supply and/or may be connectable to a power supply of the drone.

Further variants are possible such as cameras mountable on the top or bottom (the two sides) of the drone and controllable by the drone, which collects the captured images and stitches them before transmitting them to the external device. The camera may also be a one 360° camera device located in an opening in the center of the drone so that a part of is optics views a first half-sphere over the drone and the remaing part of its optics views the seconf half-sphere over the drone.

Accordingly, an embodiment of the present invention also provides a drone with a drone body and propellers and further comprising mounting means for mounting thereon optical arrangements for capturing spherical images, a first optical arrangement on a first side of the drone and a second optical arrangements on a second side of the drone opposite to the first side, the mounting means being adapted to mount the optical arrangements in such a manner that a distance between the head lenses of the respective two optical arrangements is not smaller than a minimum distance at which the 180 fields of view of the optical arrangements do not view the drone.

Such drone may accommodate optical arrangements in a position in which, the captured images to be stitched into a spherical image do not view the drone parts.

**Assembly with a smartphone**

According to an embodiment of the invention, the assembly is a personal electronic device (PED) such as a smartphone, a tablet, a notebook, a wearable equipment such as smart watches or the like.

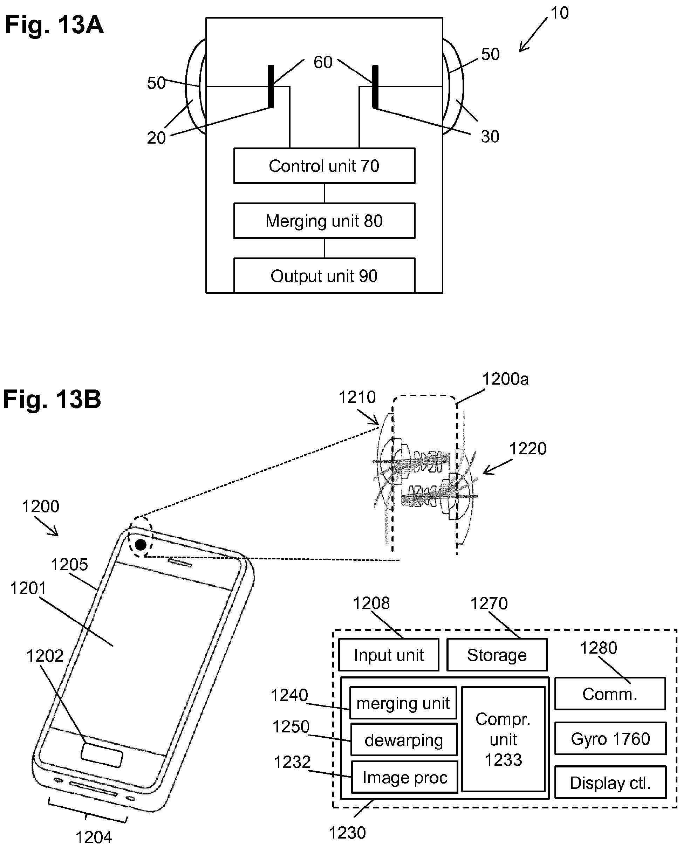

It may be particularly advantageous to provide spherical camera for a PED which already nowadays includes two cameras. The two currently implemented cameras, are not suitable for spherical capturing mainly because their optics does not provide a wide angle and because the cameras/processing means are not capable of capturing the images at the same time. According to an embodiment, a personal communication device configurable for capturing images for spherical reconstruction is provided. This is illustrated in Figures 13A and 13B.

An image capturing apparatus 10 which may be a part of the PED is shown in Figure 13A and may comprise at least two optical arrangements 20, 30 with different respective fields of view, each of the optical arrangements covering a part of a sphere and comprising a lens 50 and a sensor 60 for capturing the light coming through the lens, the at least two optical arrangements covering substantially a spherical field of view. It is noted that a head lens may also be covered by a transparent protection cover. The term "substantially" is employed to account for some minor blind spots in the spherical field of view, which may be caused by some misalignments of lenses or the like. Moreover, for instance, portions of the captured scene may include the support of the image capturing device rather than the scene.

The image capturing apparatus may further include a processing unit comprising a control unit 70 for controlling the at least two optical arrangements 20, 30 to capture respective at least two sequences of images in parallel; a merging unit 80 for stitching the at least two video sequences of images to form a single video sequence of spherical images during the capturing of the respective at least two video sequences of images; and an output unit 90 for outputting to the personal electronic device the captured images.

Correspondingly to the above described embodiments, the merging unit 80 performs stitching of the captured images by transforming the captured images into a desired projection which enables to merge them so that they form a continuous image of the scene. In particular, the fisheye projection of the captured images may be transformed into a flat projection enabling for stitching its boundaries with the boundaries of the other half-sphere.

For the purpose of stitching, blending may also be applied, where the boundary pixels (and possibly further pixels close to the boundary) of the two stitched images are mixed with a predetermined ratio (for instance equal for both images).

In particular, the controlling of the two optical arrangements 20, 30 includes controlling the reading out of the two respective sensors 60. For instance, the control unit 70 provides timing for reading out the sensors and for providing the read-out video images to the merging unit for further processing. The timing is provided by means of a clock signal as is known to those skilled in the art. Advantageously, the control unit 70 synchronizes the reading-out from the two sensors so that both sensors are read-out at the same time. However, there may be some misalignments, so that a buffer may be provided in the image capturing apparatus used to buffer the read-out images. In this way, it is possible to provide the two captured video images together for the next processing stage at the timing also controlled by the control unit 70. However, other implementations of timing (synchronization of images captured by the two sensors) are possible. For example, the reading-out from the sensors does not need to be performed at the same time and the control unit 70 may time them differently. The present invention is not limited by any particular sensor read-out synchronization timing.

In other words, the image capturing apparatus 10 is capable of parallel (in particular at the same time) capturing of images by the respective different optical arrangements 20, 30 and outputting them to the next processing stage based on the timing provided by the control unit 70. In particular, in order to enable real-time operation, the processing unit is further configured to perform stitching of the at least two video sequences of images to form a single sequence of spherical images within a time shorter than a time period between capturing of two consecutive images.

In order to achieve this, the frame rate of the stitched images may be reduced with respect to the frame rate of capturing the images. However, this approach is efficient merely for previews or in applications which then use the remaining images for an improved stitching offline.

Alternatively, the image processing device may perform parallelization and be configurable to stitch the images of the video sequence to a spherical image in a plurality of processing stages, of which each is shorter than or equal to the time between capturing two successive images of a video sequence, wherein the successive images are processed in parallel by the plurality of stages. The term "in parallel" may mean simultaneously. However, due to timing misalignments and possibly different task durations, it may also mean that the processing periods of different images in two or more stages overlap.

It is noted that the parallelizing of the processing stages is advantageously also performed fur further processing tasks or among different tasks. For instance, the processing may be parallelized so that one or more processing stages of different tasks such as merging, dewarping, white balance or compression are performed in parallel for different images.

Alternatively or in addition, when having a predetermined stitching processing as well as a predetermined output frame rate (frame rate of the stitched video), the real-time operation may further be performed by reducing the number of pixels to be read-out from the sensors. This reduction requires a controller and corresponding sensors capable of selectively reading-out only pixels within a desired region of interest. Alternatively or in addition, the real-time operation may be achieved by reducing the number of pixels read-out from the sensor to be processed by stitching. In other words, the stitched images have a smaller resolution than the captured images.

It is noted that the next processing stage may be stitching and may be performed at the image capturing device as described above. However, the present invention is not limited thereto and the processing unit may perform merely a merging of the captured images and outputting the merged image for further processing to an external device, which then performs the stitching as is described above.

The fields of view of the optical arrangements in any of the embodiments of the present invention may be overlapping.

In Figure 13B, tthe personal communication device 1200 comprises a body for carrying two optical arrangements 1210 and 1220, the body having a substantially flat shape with a first side and a second side opposite to the first side; the two optical arrangements namely a first optical arrangement 1210 and a second optical arrangement 1220, each of the two optical arrangements having a field of view of at least a half sphere and comprising a head lens and a sensor; wherein the first optical arrangement is mounted on the body with its head lens on the first side of the body viewing at least a half sphere on the first side of the body and the second optical arrangement is mounted on the body with its head lens on the second side of the body viewing at least a half sphere on the second side of the body; and the distance between the head lenses of the respective two optical arrangements is not smaller than a minimum distance at which 180 degree fields of view of the respective optical arrangements do not view the body.

In order to integrate the image capturing apparatus within a PED such as smart phone, the hard- and/or software of the PED has to be adapted to the parallel (simultaneous) capturing of two images from two optical arrangements, i.e. synchronizing the capturing by providing timing for reading out the sensors and for merging their respective images as described above.

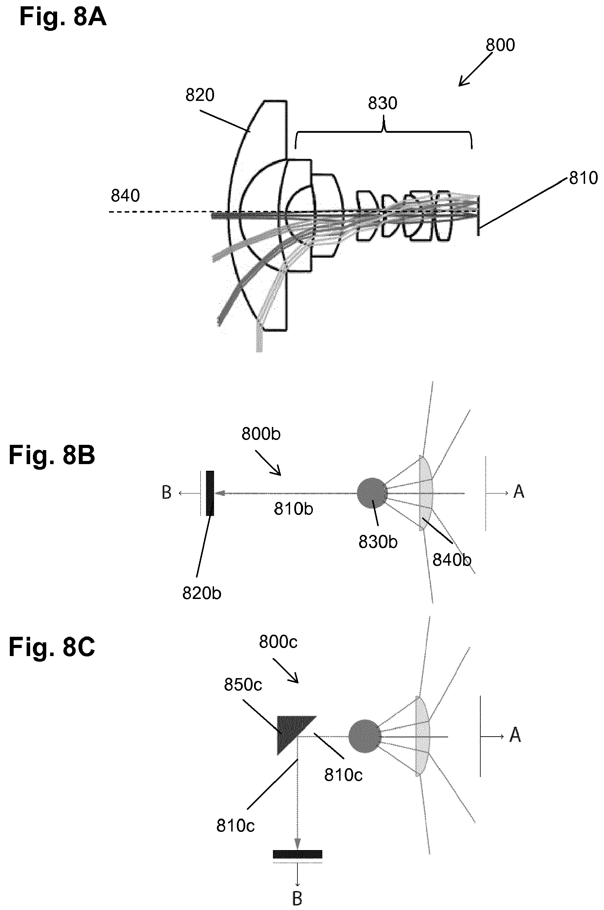

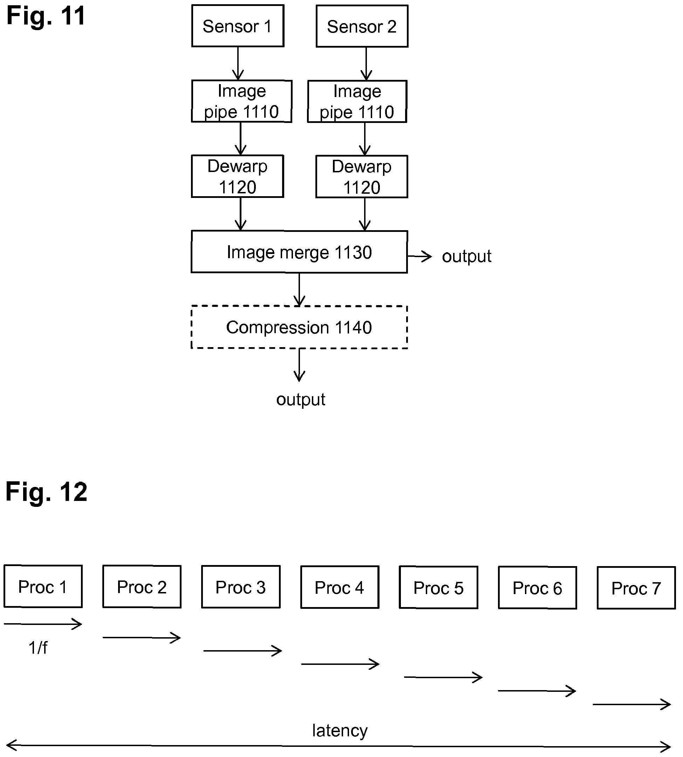

The PED 1200 shown in Figure 12, according to the embodiment, comprises two optical arrangements 1210, 1220 capable to take images simultaneously and comprises units to realize these tasks and further tasks to be able to provide stitched spherical images or sequences of images (videos, in particular 360° videos). Therese optical arrangements are shown in a detailed view of a portion 1200a of the PED shown from the top. Other arrangement of the optical arrangements may be adopted. For instance, in this figure the optical arrangements 1210 and 1220 namely a first optical arrangement and the second optical arrangement, are advantageously located beside each other. Moreover, the sensor of the first optical arrangement is located at the back side of the head lens of the second optical arrangement and the sensor of the second optical arrangement is located at the back side of the head lens of the first optical arrangement. However, this arrangement may be different. It may be beneficial to arrange the two optical arrangements beside each other in the direction orthogonal with respect to the top edge of the PED. Any other arrangement is also possible. As mentioned above, the PED may also implement different optical arrangements, for instance those shown in Fig. 8b.

As can be seen in the Figure, the PED 1200 has typical PED components such as a display 1201 which may also serve as a user interface (touch screen), additional user interface 1202 which may be for instance a key/button, a housing 1205, some connection means 1204 for providing data input/output connection and power supply input.

Inside, the PED may include a printed circuit board including further components such as processors, controllers and further units. In particular, the PED may include an input unit 1208 for processing the inputs coming from the user interface and providing corresponding signals to the processing unit and other units. The PED typically further includes a storage 1270 and a communication unit 1280, as well as a processing unit 1230. The PED may further embed a gyroscope 1760. The display 1201 may be controlled by a display controller which may be separate or implemented within the processing unit.

The processing unit 1230 may structurally comprise one or more processors including a general purpose processor and/or a digital signal processor and/or other pieces of programmable or specialized hardware.

The processing unit 1230 of the PED 1200 in this embodiment comprises a merging unit 1240 and a dewarping unit 1250 for performing dewarping of the captured images. These units may be provided within a firmware or an application or may be implemented within the operation system kernel running on a processor or more processors. The processing unit 1230 advantageously embodies an image processing unit 1232 for performing image processing such as white balance or gain control and a compression unit 1233 for compressing the data of the captured images.

The gyroscope 1260 (or GPS) can be used to stabilize the stitched video data. For example, the position of the PED 1200 may change during the capturing of the video for instance due to manipulations by the user or a movement of a support carrying the PED 1200. In order to compensate for camera movement causing fluctuations of the field of view of both optical arrangements 1210, 1220, the processing unit 1230 of the PED 1200 (for instance the image processing unit 1232 or a separate unit) can compensate for fluctuations in the sequence of images based on the input from the gyroscope 1260 specifying the current position of the optical arrangements 1210, 1220 at the time of capturing particular images, so that they appear as if they were taken from the same position, i.e. out with the same respective field of view. Recorded video data can be stored locally in the storage unit 1270 or streamed over a network or directly via the communication means 1280 to a platform or to a virtual reality (VR) headset.

However, it is noted that the present invention is not to be limited by the embodiments of the assembly being drones with camera(s) or PED(s).

**Image capturing device**

In the present invention, a body of a flat shape carries at least two optical arrangements which capture video images covering a sphere. The images can thus be stitched to form spherical images and thus to obtain a spherical video sequence.

The above examples showed assembly with two optical groups, each capturing a half sphere. Below, such optical groups are described in more detail. However, it is noted that the present invention is not limited to optical arrangements only including one respective optical group. The optical arrangement may also include more optical groups arranged so that the distance between their nodal points is not smaller than a minimum distance at which the 180 fields of view of the optical arrangements do not view the body.

An exemplary optical group is shown in Figure 8. The optical group 800 is arranged on the same axis 840. Light enters the optical group 800 through a head lens 820 and passes a set of lenses 830 to be captured by image sensor 810. This exemplary optical group provides a field of view of 180 degrees, i.e. a half-sphere.

However, it is noted that the present invention is not limited to this exemplary optical group. Figures 8B and 8C illustrate two other and more general examples of optical groups that may be used.

In particular, Figure 8B shows an optical group 800b similar to that of Figure 8B, having a head lens 840b and a sensor 820b located on the same optical axis (A, B). Also on the same optical axis one or more further lenses 830b may be arranged through which the light 810b passes before being captured by the sensor 820b.

Figure 8C on the other hand shows an optical group 800c of which the lens 840c has an optical axis A different from the optical axis B of the sensor 820c. In this figure, the optical axis A of the head lens is orthogonal on the optical axis B of the sensor. This is achieved in that the optical group 300B further comprises a reflective element 850c, which may be a prism, a mirror or any other means for reflecting the light. In particular, the light entering the head lens 840c passes through the head lens 810c and is reflected on the reflective element 850c two continue 810c to the sensor 820c. An optical group in which the optical axis of the sensor and the head lens differ may be beneficial for achieving a compact arrangement of a plurality of such optical groups within a common housing or for matching some particular design features of the housing.

Figure 8C illustrates possible further lenses belonging to the optical group 800c and located on the same optical axis A as the head lens. However, this example is not limiting and these further lenses may also be located at least partly on the same optical axis B as the sensor 820c. Alternatively, the angle between the optical axis A of the head lens and the optical axis B of the sensor may be more or less than the right angle (90°). In other words, the present invention is not limited by the form of the optical group.

**Capturing and processing of images**

According to an embodiment, the image processing device 620 is configurable to stitch the images of the video sequence to a spherical image within a time smaller than the time between capturing two successive images of the video sequence, and the communication interface 960 is configured to transmit the stitched images of the video sequence to an external device.

The stitching task may also be further parallelized. Accordingly, the image processing device is configurable to stitch the images of the video sequence to a spherical image in a plurality of processing stages, of which each is shorter than or equal to the time between capturing two successive images of a video sequence, wherein the successive images are processed in parallel by the plurality of stages.

The external device may be an external memory (storage) and/or a headset/helmet or a display of another kind such as a computer display, projector or the like. An advantage of preforming the stitching at the drone is that the stitched images can be directly transmitted to the displaying or storing device.

However, according to another embodiment, the image processing device 620 is configurable to merge the images to one merged image within a time smaller than or equal to the time period between capturing two successive images of a video sequence, and the communication interface is configured to transmit the stitched images of the video sequence to the external device for further processing including stitching. The merging may also be parallelized as described for stitching above.

It is noted that some of the processing tasks (for instance stitching as described above) may also take a multiple of the time period between capturing two successive images. Figure 12 illustrates schematically a general timing of the processing according to an embodiment. Processing stages Proc 1 to Proc 7 are performed for a captured image consecutively and within the respective time periods of the duration 1/f, with f being the frame rate of outputting the processed video (advantageously corresponding to the frame rate of the image capturing). The seven processing stages thus cause a latency of 7 times the frame period 1/f. According to an example, Proc 1 may be the capturing of the two images, Proc 2 may be their merging into one image, Proc 3 and 4 may both be different stages of dewarping task, Proc 5 may be stitching (blending or mere merging of the dewarped images), and Proc 6 and 7 may be two stages of the task of compressing the stitched image. However, this is only an example and there generally may be any number of processing tasks and the corresponding stages. The duration of the tasks may thus also differ.

The tasks are in this way advantageously parallelized for different images in the image processing device (which may comprise one or more processors). This means that a processing task i for frame N is performed simultaneously with task i-1 for frame N+1 and with task i-2 for frame N+2, etc. For instance, in the above example, images of frame N are compressed in the processing stage Proc 6 while the images of frame N+1 are merged in the processing stage Proc 5 and images of frame N+2 dewarped in processing stage Pros 4.

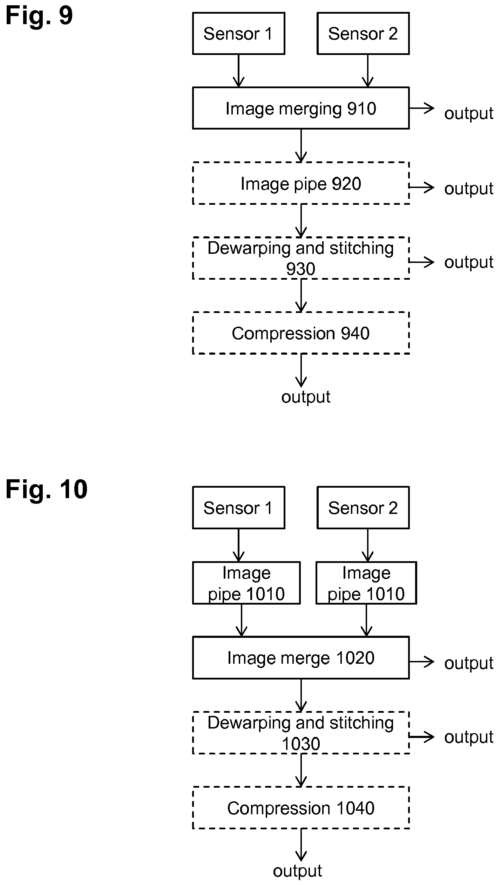

Figure 9 illustrates an exemplary flow diagram for performing processing by the image processing unit 620. The flow shown includes capturing the images by the two sensors of the optical arrangements of the assembly, the two sensors being denoted as sensor 1 and sensor 2, merging 910 the two images and depending on the variant performing further processing such as image pipe processing 920 , dewarping and stitching 930 as well as encoding 940 (compression). Image pipe processing 920 may include various operations such as white balance, gain control, or the like.

In this context, gain is an electronic amplification of the video signal. By means of the gain control, the image signal is boosted electronically, adding more voltage to the pixels read from the image sensor (CCD or CMOS) causing them to amplify their intensity and therefore brighten the image.

Further color balance is a global adjustment of the intensities of the colors (typically red, green, and blue primary colors). The aim is an adjustment to render specific colors and, in particular neutral colors such as white in a perceptually pleasant manner. White balance thus changes the overall mixture of colors in an image and is used for correction of the various light conditions during capturing.

In general, the term "dewarping" is a processing for suppressing or reducing a warping effect, i.e. transforming the projection of the captured image. Taking the same image at a finite distance introduces various distortions, such as warping (also called as "fisheye" effect) which causes horizontal and vertical lines captured to appear curved. This can be corrected by calibrating the disparity to determine a mapping which is then applied to compensate for the warping effect. In step 930, the dewarping is a step belonging to the sticthing. The two captured images are transformed from the captured projection of the lenses onto a different projection more suitable for stitching.

In particular, Figure 9 shows an example in which the output of the two sensors of the respective two optical arrangements is merged in unit 910. Merging in this context is a mere attaching of the two captured images into one single image. This processing step has an advantage of providing a single input for further processing or transmission.

The output of each sensor in this embodiment is an image in a raw format, i.e. a sequence of binarized pixel values scanned in a predetermined manner, for instance a row-wise. The image may include one or more colour components corresponding to the type of the sensor as is known to those skilled in the art. In the merging in unit 910, the two images from the respective two sensors (sensor 1, sensor 2) are merged together to form a single image. The merging is performed according to a pre-determined scheme. The merged image may then be sent to the external device. This is illustrated in Figure 9 by the arrow to the right of the image merging 910. In case of capturing a sequence of images (video), the capturing by the two sensors and the image merging is performed cyclically and repeatedly. In order to enable real-time operation and avoid introducing a large buffer into the image capturing device, the image merging 910 must be performed fast. In particular, in order to keep a constant latency between capturing and outputting the captured and merged images (and thus in order to enable real-time operation), the merging should not take more time than the time between capturing two frames, i.e. between capturing two images in one video sequence. However, this advantageous example is not to limit the invention. Each processing task may also be subdivided into more stages which may be performed within the respective more time periods between capturing two frames.

It is noted that the step of merging is performed in order to provide one input for further processing. It may also be possible to output the two read-out images in some implementations without merging.

According to a variant, illustrated by dotted lines in Figure 9, the processing unit of the image capturing apparatus in the assembly may perform further image processing functions to the merged image and only thereafter output the merged image to the external device. For instance, image pipe processing 920 may be performed, including gain control, white balance, any kind of filtering or the like, in order to improve the merged image quality.

Alternatively or in addition, according to a further variant, the processing unit may perform dewarping 930 and stitching of the two images composing the merged image. If the dewarping and stitching 930 is performed by the assembly, the stitched image is output to the external device ready to be displayed.

The term "stitching" in this context means that two or more images are merged together to form one image which may then be viewed by a suitable viewer. Typically, stitching is to be performed in such a manner that the stitching boundary is not visible in order to give to the viewer impression that the merged image has been directly captured rather than merged. The dewarping may be a part of the stitching: for example, in order to stitch images properly to form a spherical image, it is beneficial if the deformation caused by the capturing lens is compensated for before stitching. Thus, for instance, the fisheye projection is transformed into a plane and then stitched along the boundary of the captured images or blended.

In order to maintain constant latency, each image dewarping and stitching stage of an Nth image is performed between capturing an (N+m)th image and (N+m+1)th image, wherein m is equal to or larger than zero and represents the latency with which the image is processed with respect to the image capturing timing. It is noted that m does not necessarily has to be an integer.

A fast stitching may be performed based on a predetermined mapping, which is obtained by a calibration of the mapping for a particular position of the optical groups.

In order to ensure that a processing task (merging or image pipe or dewarping/stitching processing) does not exceed the time between the capturing of two consecutive frames or their multiples (i.e. the time for the processing step remains constant), the relation between frame rate and number of pixels to be processed has to be adjusted, assuming that the processing method has already been optimized as far as possible. Accordingly, for instance, a frame rate of 25 frames per second is required and the sensor delivers more pixels than each step (stage) of the stitching or dewarping can be processed in 1/25 second, then the number of pixels processed, i.e. the spatial resolution is reduced. While merging 910 is a simple operation, some more complicated image pipe operations and dewarping/stitching may require such reduction of the spatial resolution (depending on the resolution delivered by the sensor). In other words, for a predetermined frame rate, the number of pixels to be processed and output is reduced in such a manner that each single step (stage) of the processing may be performed within the time period inverse to the frame rate.

According to a variant, the image capturing apparatus may include an encoding unit 940 for compressing the data corresponding to the stitched image 910, or if applicable the further processed data in the image pipe 920 and/or the dewarping/stiching 930. In this variant, the image capturing apparatus would output the stitched and compressed image to the external device. Again, in order to maintain constant latency, each step of the the compression should also not take more than an inverse of the frame rate.

The compression process may be a variable length coding, run length coding, or a hybrid coding according to any standardised or proprietary algorithm. For instance, ITU H.264/AVC (MPEG-4) or ITU H.265/HEVC or H.263 or any other video coding standard may be applied.

If still images are captured, any still image standard may be applied. Performing the compression before outputting the merged image to the external device may provide the advantage of a reduced transmission capacity necessary for the transfer. On the other hand, some external devices such as smartphones, tablets, personal computers or the like can include a software for performing compression, so that the compression may be performed at such device. In such a case, the image capturing apparatus does not need to perform compression, thereby simplifying the device.

The level of sharing the computation power between the assembly and the external device may depend on the transmission channel capacity available, computational power available and the real-time requirements. It may also be configurable for the assembly from the external device. For instance, if the external device is a personal computer with sufficient computational power, larger than the computational power of the assembly, it may be beneficial to provide the external device with merely merged image and to perform the remaining operations (image pipe, dewarping/stitching, compression) in the external device. On the other hand, if the assembly is to stream the video onto a smartphone with a smaller power or to a headset, it may be advantageous to perform all processing steps in the units 920-940 in the assembly.

The assembly may store the mapping between the images taken from the two sensors and the resulting stitched image. This mapping may be preset, for instance obtained by initial calibration of the image capturing device. However, the present invention is not limited to such calibration. Alternatively or in addition thereto, the mapping may be configurable. Such configuration may be performed for instance by an external device such as a computer, which may also be a tablet, smartphone or other personal electronic device with the corresponding software. Using of a predetermined scheme for merging the images provides the advantage of internal stitching without the necessity of performing any complex operations of adjusting the image positions between the captured images by image processing such as boundary matching. However, the merging could also be performed by determining and/or checking the correct alignment of the two images by image processing means such as boundary matching implemented by the processing unit

As already mentioned, steps in units 920 to 940 in Figure 9 are illustrated by a dashed line meaning that depending on the variant of the assembly they are part of the device or not.. For instance, the merging in unit 910 may be performed in the image capturing apparatus and the merged image is output to an external device. In this case, the external device then realizes the subsequent steps, e.g. the further processing and compressing. Furthermore, some or all of the further processing and compression could also be carried outside of the image capturing apparatus and the external device.

Figure 10 illustrates another embodiment of a processing flow performed by the image processing unit of the assembly. The processing flow of Figure 10 differs from the processing flow of Figure 9 in particular in that before merging 1020, the two images read from the two respective sensors 1 and 2 are image processed separately, i.e. in separate image pipes 1010. This processing flow provides the possibility of parallelizing the image pipe processing 1010. Moreover, since the images captured by different optical arrangements, i.e. different lenses and image sensors, may have been captured under different light conditions, independent adjustments may be necessary to carry out. In this example, after separate processing 1010 of the two images in the respective image pipes, the processed images are merged 1020 like in the embodiment of Figure 9 and can be output to the external device.

The external device may then perform dewarping and stitching and/or further image processing and/or realize compression. Alternatively, the dewarping/stitching 1030 and/or compression 1040 may be performed in the assembly (applied to the merged image) before outputting the processed and/or compressed merged image to the external device.

Figure 11 shows another embodiment of a processing flow which may be performed by the assembly. The processing flow of figure 11 differs from the processing flow of figure 10 in that dewarping 1120 is performed before image merging 1130 and performed separately and preferably in parallel for the two respective images to be merged. The dewarping performed on a captured image rather than on the merged image has the advantage of enabling parallel dewarping of the images to be matched. Moreover, the warping effect is a result of distortion caused by the wide-angle lenses of the respective optical arrangements. Thus, the dewarping function used to correct the images can be adapted to the respective images independently. After the images are dewarped, i.e. transformed in a projection in which stitching is performed, the stitching based on a predetermined transformation (based on an initial calibration) may be performed as a simple merging of the images).

The two images captured by the respective two sensors and processed in separate image pipes 1110 and by separate dewarping units 1120 are then merged in unit 1130 like described above for the embodiments of Figures 9 and/or 10. The stitched image may then be output to the external device. Alternatively, before outputting the stitched image, the stitched image may be compressed in unit 1140 as described above for the embodiments of Figures 9 and/or 10 and then output to the external device.

*Capturing assembly position*

According to an embodiment of the invention, the assembly further comprises a position capturing means for capturing current position of the assembly including at least one of GPS coordinates and yaw, pitch, roll orientation. This data may be further transmitted to the external device and/or used for stitching. In particular, the assembly may implement a gyroscope and/or a GPS receiver as the position capturing means.

In particular, during the stitching the orientation of the assembly during the capturing may be used to stabilize the stitched video.

Moreover, the GPS coordinates and/or time and date of the capturing may be also saved with the stitched video as meta-data to provide information to the user.

It is further recognized that the various embodiments may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments may also be performed or embodied by a combination of these devices.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It would be appreciated by a person skilled in the art that numerous variations and/or modifications may be made to the present disclosure as shown in the specific embodiments. The present embodiments are, therefore, to be considered in all respects to be illustrative and not restrictive.

The present invention relates to an assembly including a body for carrying two optical arrangements, the body having a flat shape with a first side and a second side opposite to the first side; the two optical arrangements namely a first optical arrangement and a second optical arrangement, each of the two optical arrangements having a field of view of at least a half sphere and comprising a head lens and a sensor; wherein the first optical arrangement is mounted on the body with its head lens on the first side of the body viewing at least a half sphere on the first side of the body and the second optical arrangement is mounted on the body with its head lens on the second side of the body viewing at least a half sphere on the second side of the body; and the inte-nodal distance between the respective two optical arrangements is not smaller than a minimum distance at which 180 fields of view of the optical arrangements do not view the body.

**Claims**

1. An assembly for capturing images for spherical or 3D reconstruction, the assembly comprising:

   a self-propelled body for carrying two optical arrangements, the body having a substantially flat shape with a first side and a second side opposite to the first side;
   the two optical arrangements namely a first optical arrangement and a second optical arrangement, each of the two optical arrangements having a field of view of at least a half sphere and comprising a head lens and a sensor;
   wherein the first optical arrangement is mounted on the body with its head lens on the first side of the body viewing at least a half sphere on the first side of the body and the second optical arrangement is mounted on the body with its head lens on the second side of the body viewing at least a half sphere on the second side of the body; and
   the distance between the head lenses of the respective two optical arrangements is not smaller than a minimum distance at which 180 degree fields of view of the respective optical arrangements do not view the body.

2. The assembly according to claim 1, wherein the distance between the head lenses of the respective two optical arrangements is a plurality of times smaller than the largest dimension of the 1$^{st}$ and 2$^{nd}$ side of the body.

3. The assembly according to claim 1 or 2, wherein the assembly further comprises:

   an image processing device for processing the captured images;
   a controller for controlling parallel reading-out the captured images from the sensors of the two optical arrangements and providing the captured images to the image processing device with a predetermined period to obtain corresponding two video image sequences; and
   a communication interface for transmitting the processed captured images to an external device.

4. The assembly according to any of claim 3, wherein
   the image processing device is configurable to stitch the images of the video sequence to a spherical image within a time smaller than or equal to the time between capturing two successive images of a video sequence or to stitch the images of the video sequence in a plurality of processing stages, of which each is shorter than or equal to the time between capturing two successive images of a video sequence, wherein the successive images are processed in parallel by the plurality of stages, and
   the communication interface is configured to transmit the stitched images of the video sequence to the external device.

5. The assembly according to any of claims 1 to 4, wherein
   the image processing device is configurable to merge the images to one merged image within a time smaller than the time between capturing two successive images of a video sequence, and
   the communication interface is configured to transmit the stitched images of the video sequence to the external device for further processing including stitching.

6. The assembly according to any of claims 1 to 5, wherein
   each of the two optical arrangements is a single optical group with at least a half-sphere field of view;
   the optical axes of the head lenses of the two optical arrangements are parallel or identical.

7. The assembly according to any of claims 1 to 5, wherein
   the self-propelled body is a remotely controllable drone including a drone base and a plurality of propellers.

8. The assembly according to claim 7, wherein
the optical arrangements are mountable and demountable on the drone body; and
the drone body embodies electronics for controlling the video image capturing, image processing and power supply for the optical arrangements.

9. The assembly according to claim 7, wherein
the optical arrangements are cameras mountable and demountable on the drone body, each camera embodying electronics for controlling the video image capturing, image processing, and communication interface for transmitting the captured images to an external device.

10. The assembly according to any of clams 3 to 5, wherein the image processing device is further configured to apply at least one of gamma correction, white balance or compression to the captured video images.

11. The assembly according to any of claims 1 to 10, further comprising
a position capturing means for capturing current position of the assembly including at least one of GPS coordinates and yaw, pitch, roll orientation.

12. A system for capturing spherical video sequences, comprising
the assembly according to claim 3 for performing video image capturing and providing
the captured video images to a computer over a wireless interface,
the computer for receiving from the assembly the captured images, stitching them and outputting the stitched images to a display device.

13. The system according to claim 12, further comprising the display device which is connected with the computer via wireless interface and capable of receiving and displaying from the computer stitched images.

14. A drone of a flat shape comprising:

a drone body and a plurality of propellers; and
a mounting means for mounting thereon optical arrangements for capturing spherical images, a first optical arrangement on a first side of the drone and a second optical arrangements on a second side of the drone opposite to the first side, the mounting means being adapted to mount the optical arrangements in such a manner that a distance between the head lenses of the respective two optical arrangements is not smaller than a minimum distance at which the fields of view of the optical arrangements cross without viewing the drone.

15. A personal communication device configurable for capturing images for spherical reconstruction comprising:

a body for carrying two optical arrangements, the body having a substantially flat shape with a first side and a second side opposite to the first side;
the two optical arrangements namely a first optical arrangement and a second optical arrangement, each of the two optical arrangements having a field of view of at least a half sphere and comprising a head lens and a sensor; wherein the first optical arrangement is mounted on the body with its head lens on the first side of the body viewing at least a half sphere on the first side of the body and the second optical arrangement is mounted on the body with its head lens on the second side of the body viewing at least a half sphere on the second side of the body; and
the distance between the head lenses of the respective two optical arrangements is not smaller than a minimum distance at which 180 degree fields of view of the respective optical arrangements do not view the body.

## Fig. 1a

## Fig. 1b

# Fig. 2a

# Fig. 2b

EP 3 190 460 A1

**Fig. 3**

**Fig. 4A**

**Fig. 4B**

18

**Fig. 4C**

461

480    460

462

**Fig. 5**

510

550

520

# Fig. 6

# Fig. 7

## Fig. 8A

820

830

800

840

810

## Fig. 8B

800b

B ← 810b

A →

820b

830b

840b

## Fig. 8C

800c

850c

810c

810c

A →

B

**Fig. 9**

```
┌──────────┐   ┌──────────┐
│ Sensor 1 │   │ Sensor 2 │
└────┬─────┘   └────┬─────┘
     │              │
     ▼              ▼
┌──────────────────────────┐
│   Image merging 910      │ ──▶ output
└────────────┬─────────────┘
             │
             ▼
┌ ─ ─ ─ ─ ─ ─ ─ ─ ─ ─ ─ ─ ─┐
   Image pipe 920            ──▶ output
└ ─ ─ ─ ─ ─ ─┬─ ─ ─ ─ ─ ─ ─┘
             │
             ▼
┌ ─ ─ ─ ─ ─ ─ ─ ─ ─ ─ ─ ─ ─┐
   Dewarping and stitching   ──▶ output
           930
└ ─ ─ ─ ─ ─ ─┬─ ─ ─ ─ ─ ─ ─┘
             │
             ▼
┌ ─ ─ ─ ─ ─ ─ ─ ─ ─ ─ ─ ─ ─┐
     Compression 940
└ ─ ─ ─ ─ ─ ─┬─ ─ ─ ─ ─ ─ ─┘
             │
             ▼
          output
```

**Fig. 10**

```
┌──────────┐   ┌──────────┐
│ Sensor 1 │   │ Sensor 2 │
└────┬─────┘   └────┬─────┘
     │              │
     ▼              ▼
┌──────────┐   ┌──────────┐
│  Image   │   │  Image   │
│ pipe 1010│   │ pipe 1010│
└────┬─────┘   └────┬─────┘
     │              │
     ▼              ▼
┌──────────────────────────┐
│    Image merge 1020      │ ──▶ output
└────────────┬─────────────┘
             │
             ▼
┌ ─ ─ ─ ─ ─ ─ ─ ─ ─ ─ ─ ─ ─┐
   Dewarping and stitching   ──▶ output
           1030
└ ─ ─ ─ ─ ─ ─┬─ ─ ─ ─ ─ ─ ─┘
             │
             ▼
┌ ─ ─ ─ ─ ─ ─ ─ ─ ─ ─ ─ ─ ─┐
     Compression 1040
└ ─ ─ ─ ─ ─ ─┬─ ─ ─ ─ ─ ─ ─┘
             │
             ▼
          output
```

**Fig. 11**

```
┌──────────┐      ┌──────────┐
│ Sensor 1 │      │ Sensor 2 │
└────┬─────┘      └────┬─────┘
     │                 │
     ▼                 ▼
┌──────────┐      ┌──────────┐
│  Image   │      │  Image   │
│pipe 1110 │      │pipe 1110 │
└────┬─────┘      └────┬─────┘
     │                 │
     ▼                 ▼
┌──────────┐      ┌──────────┐
│ Dewarp   │      │ Dewarp   │
│  1120    │      │  1120    │
└────┬─────┘      └────┬─────┘
     │                 │
     ▼                 ▼
┌─────────────────────────────┐
│     Image merge 1130        │──▶ output
└──────────────┬──────────────┘
               │
               ▼
┌ ─ ─ ─ ─ ─ ─ ─ ─ ─ ─ ─ ─ ─ ┐
   Compression 1140
└ ─ ─ ─ ─ ─ ─ ─┬─ ─ ─ ─ ─ ─ ┘
               │
               ▼
            output
```

**Fig. 12**

```
┌────────┐  ┌────────┐  ┌────────┐  ┌────────┐  ┌────────┐  ┌────────┐  ┌────────┐
│ Proc 1 │  │ Proc 2 │  │ Proc 3 │  │ Proc 4 │  │ Proc 5 │  │ Proc 6 │  │ Proc 7 │
└────────┘  └────────┘  └────────┘  └────────┘  └────────┘  └────────┘  └────────┘
 ─────▶        ─────▶       ─────▶       ─────▶      ─────▶      ─────▶      ─────▶
  1/f
```

latency

## Fig. 13A

Control unit 70

Merging unit 80

Output unit 90

## Fig. 13B

Input unit    Storage

merging unit    Compr. unit 1233

dewarping

Image proc

Comm.

Gyro 1760

Display ctl.

Europäisches
Patentamt

European
Patent Office

Office européen
des brevets

# EUROPEAN SEARCH REPORT

Application Number

EP 16 30 5007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/040291 A1 (MCCALL DANNY A [US] ET AL) 12 February 2009 (2009-02-12) * paragraph [0035] - paragraph [0038]; claims 36-52; figures 1-13 * * paragraph [0060] - paragraph [0075] * * paragraph [0080] * | 1-15 | INV. G03B35/08 G03B35/18 G03B37/04 G02B27/22 H04N5/341 |
| X | US 2012/169842 A1 (CHUANG DANIEL B [US] ET AL) 5 July 2012 (2012-07-05) * paragraphs [0006], [0007], [0048] - paragraph [0114]; claims 1,2,33-35; figures 1-14,17 * * paragraph [0122] - paragraphs [0125], [0173], [0194] * | 1-15 | |
| X | US 2008/075391 A1 (VAN DEN HEUVEL FRANCISCUS A [NL] ET AL) 27 March 2008 (2008-03-27) | 1-6, 10-15 | |
| A | * the whole document * | 7-9 | |

TECHNICAL FIELDS
SEARCHED (IPC)

G03B
G02B
H04N

The present search report has been drawn up for all claims

| Place of search | Date of completion of the search | Examiner |
|---|---|---|
| Munich | 8 June 2016 | Durucan, Emrullah |

EPO FORM 1503 03.82 (P04C01)

## ANNEX TO THE EUROPEAN SEARCH REPORT
## ON EUROPEAN PATENT APPLICATION NO.

EP 16 30 5007

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2016

| Patent document cited in search report | | | Publication date | Patent family member(s) | | | Publication date |
|---|---|---|---|---|---|---|---|
| US | 2009040291 | A1 | 12-02-2009 | US | 7382399 | B1 | 03-06-2008 |
| | | | | US | 2009040291 | A1 | 12-02-2009 |
| US | 2012169842 | A1 | 05-07-2012 | US | 2012169842 | A1 | 05-07-2012 |
| | | | | US | 2015271453 | A1 | 24-09-2015 |
| US | 2008075391 | A1 | 27-03-2008 | AT | 417342 | T | 15-12-2008 |
| | | | | BR | PI0704526 | A | 13-05-2008 |
| | | | | CA | 2603329 | A1 | 22-03-2008 |
| | | | | CY | 1109538 | T1 | 13-08-2014 |
| | | | | DK | 1903534 | T3 | 14-04-2009 |
| | | | | EP | 1903534 | A1 | 26-03-2008 |
| | | | | ES | 2317394 | T3 | 16-04-2009 |
| | | | | PT | 1903534 | E | 03-02-2009 |
| | | | | SI | 1903534 | T1 | 30-04-2009 |
| | | | | US | 2008075391 | A1 | 27-03-2008 |

EPO FORM P0459

For more details about this annex : see Official Journal of the European Patent Office, No. 12/82